# EUROPEAN PATENT SPECIFICATION

(11) **EP 2 532 144 B1**
(45) Date of publication and mention of the grant of the patent: **02.04.2014**
(21) Application number: 11704948.6
(22) Date of filing: 02.02.2011
(51) Int. Cl.: H04L 29/08, G06F 9/50

(54) **SYSTEM AND METHOD FOR WIRELESS STACK IMPLEMENTATION ON MULTIPLE WIRELESS DEVICES**
SYSTEM UND VERFAHREN ZUR DRAHTLOSEN STAPELIMPLEMENTIERUNG AUF MEHRFACHEN DRAHTLOSEN VORRICHTUNGEN
SYSTÈME ET PROCÉDÉ D'IMPLÉMENTATION D'UN EMPILEMENT SANS FIL SUR DES DISPOSITIFS SANS FIL MULTIPLES

(30) Priority: 25.01.2011 IN DE01762011; 06.02.2010 IN DE02432010
(43) Date of publication of application: 12.12.2012
(73) Proprietor: ST-Ericsson SA, 1228 Plan-les-Ouates (CH)
(72) Inventor: GUPTA, Naresh, Delhi IN-110088 (IN); AGARWAL, Mayank, New Delhi IN-110017 (IN); CAPRETTA, Pietro, B-020 Bruxelles (BE); SHARMA, Neeraj, Noida IN-201301 (IN); KUMAR, Manoj, Uttar Pradesh IN-201307 (IN)
(74) Representative: Ström & Gulliksson AB
(86) International application number: PCT/EP2011/051452
(87) International publication number: WO 2011/095508

(56) References cited:
- WO-A1-01/31852
- WO-A1-01/97464
- WO-A1-03/036397

## Description

### TECHNICAL FIELD

The present invention relates to Wireless Communication in general and to wireless stacks in particular.

### BACKGROUND

In a conventional wireless stack implementation, the wireless stack is divided into a host stack, which runs on a host, and a host controller, where a lower layer stack runs. The host is a processor that runs the applications e.g. an application processor in a mobile environment. The host stack is an upper layer stack of the wireless protocol. The host stack is responsible for providing applications such as: application-programming interfaces (APIs) for initializing, accessing and utilizing the wireless stack. The host controller is a device that attaches to the host and provides wireless connectivity and performs low-level tasks such as- link management, media access etc. Further, in certain conventional applications, the host and the host controller are physically connected through a wired host controller interface (HCI) such as: Universal Synchronous receiver/transmitter (UART), universal serial bus (USB), Secure Digital Input Output (SDIO), Personal Computer Memory Card International Association (PCMCIA) etc., on the same physical device.

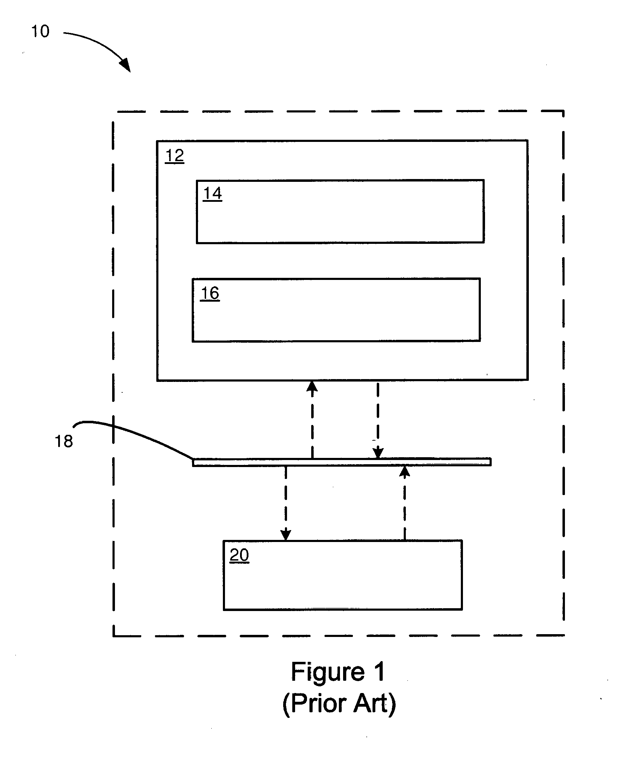

In the known implementations, both the host and the controller must be connected by a Host Controller Interface (HCI), so as to enable the wireless stack may function. Figure 1 illustrates a conventional wireless stack implementation in a wireless device 10. As illustrated, the wireless device 10 has a host 12 and a host controller 20. The host 12 and the host controller 20 reside on separate processors in the wireless device 10. The host 12 further has an application module 14 and a wireless stack 16. The host 12 communicates with the host controller 20 through a HCI 18. The wireless stack 16 sends a message to the host controller 20. On receipt of the message, the host controller 20 indicates to the host 12 that the wireless stack 16 is initialized and is ready for communication. Hence, the application module 14 is able to utilize the capabilities of the wireless stack 16. And finally, the application de-initializes the wireless stack 16 and the HCI 18.

Conventional techniques as illustrated above increase the minimum requirement for each device to provide wireless functionality since multiple processors are required on the same device. This leads to increased power requirements and increase in the physical footprint of the device.

Broadly the wireless devices may be categorized as embedded devices and peer devices. Typically the embedded devices have hardware limitations and their functionality gets frozen at the time of production. Hence it is difficult to upgrade the functionality/software running on the embedded device. Generally, the improvement in the functioning of an embedded device requires modification in the hardware that is typically not possible due to power consumption, size and cost constraints.

For example a typical bluetooth hands-free device is configured to perform predefined functions such as bluetooth-based communication between wireless devices. If the software version or the functional features of the bluetooth hands-free device is required to be upgraded, then it may not be possible without a corresponding hardware change. Hence, software or functional features upgradation may not be accomplished in the same physical device.

Further in a system where plurality of embedded devices, such as a heating furnace, bio-diesel production plant, nuclear reactor etc., are connected to one or more peer devices, such as: temperature sensors, installed in a remote location, it is difficult to identify and rectify faults in one or more embedded devices without physically accessing the embedded devices. In such case, if any one or more temperature sensors in the plant gets damaged or provide incorrect results, the entire system gets hampered and until the specific damaged temperature sensor is not repaired/replaced, the system is unable to function in a normal manner. Furthermore, it is not possible to upgrade the software/function of the embedded devices. Document WO 01/97464 of 20/12/2001 discloses a distributed processing system which allows a processing stack (such as Bluetooth stack) to be split between different locations using a communication link.

The subject matter disclosed herein is not limited to embodiments that solve any disadvantages or that operate only in environments such as those described above. Rather, this background is only provided to illustrate one exemplary technology area where some embodiments described herein may be practiced.

### SUMMARY

Exemplary embodiments provide, among other benefits and advantages, an architecture and methodology to enable devices to run part(s) of the wireless stack on multiple devices thereby enabling upgrade and rectification of the functionality of the embedded wireless stacks. It will be appreciated that, the present invention is not limited to implementations, which experience these benefits and advantages except to the extent that such benefits and advantages are explicitly recited in the claims.

According to an exemplary embodiment, a system as in claim 1 for enabling parts of a wireless stack to physically run on multiple devices, wherein the devices are connected together by a wireless link, includes at least one peer device and at least one embedded device. The peer device includes at least one application module, atleast one wireless stack, wherein one or more wireless stacks are divided into parts and a data routing entity for communicating with the embedded device. The embedded device comprises a transceiver, a memory configured to store at least one part of the wireless stack and a data routing entity. The embedded device is configured to execute at least one application, when a connection is established between the embedded device and the peer device.

According to yet another exemplary embodiment, a method as in claim 8 of controlling at least one embedded device through at least one peer device, wherein the peer device having at least one application module and at least a part of one or more wireless stack, comprises the step of establishing a connection between the at least one peer device and the at least one embedded device, the connection being established, on initializing the part of wireless stack by the at least one application module; sending a proprietary message from the wireless stack of the peer device to the embedded device through a wireless link; establishing, on receiving the proprietary message, a mechanism in the embedded device to differentiate between the data received from the wireless stack and data received from other sources; sending a confirmation message from the embedded device to the peer device, after the embedded device is ready to execute the at least one application module; and executing the at least one application stored on the part of wireless stack, on the embedded device.

According to yet another exemplary embodiment, an embedded device as in claim 13 of a wireless communication system, comprises a wireless stack divided into parts and at least a part of the wireless stack is provided on one or more peer devices, a data routing entity configured to establish a wireless connection with one or more peer devices, wherein the embedded device is configured to exhibit a function based on the implementation of application on the peer device.

According to another exemplary embodiment, a peer device of a wireless communication system comprises a memory which stores plurality of parts of a wireless stack, a part of which is provided on an embedded device, multiple applications installed on the peer device in parts and on the embedded device; and a data routing entity configured to establish a wireless connection with the at least one embedded device, wherein the peer device is configured to control the functions of at least the part of the application executing on the embedded device.

Additional features of the invention will be set forth in the description that follows, and in part will be obvious from the description, or may be learned by the practice of the invention. The features and advantages of the invention may be realized and obtained by means of the instruments and combinations particularly pointed out in the appended claims. These and other features of the present invention will become more apparent from the following description and appended claims, or may be learned by the practice of the invention as set forth hereinafter.

### Brief description of drawings

To further clarify the above and other advantages and features of the present invention, a more particular description of the invention will be rendered by references to exemplary embodiments thereof, which are illustrated in the appended drawings. It is appreciated that these drawings depict only typical embodiments of the invention and are therefore not to be considered limiting of its scope. The invention will be exemplified with reference to the accompanying drawings, wherein:
Figure 1 illustrates an implementation of a conventional wireless stack;
Figure 2 illustrates a schematic view of the invention according to an exemplary embodiment of the present invention;
Figure 3 illustrates a schematic view of the invention according to another exemplary embodiment of the present invention;
Figure 4 illustrates a schematic view of the invention according to yet another exemplary embodiment of the present invention;
Figure 5 illustrates a schematic view of the invention according to yet another exemplary embodiment of the present invention; and
Figure 6 illustrates a flowchart for controlling an embedded device through a peer device according to an exemplary embodiment of the present invention.

### Description of the preferred embodiments

The following detailed description does not limit the invention. The scope of the invention remains defined by the appended claims.

The present invention relates to a system for enabling parts of a wireless stack to physically run on multiple devices connected together by wireless link(s). The system comprises at least one peer device and at least one embedded device. In the present invention, a 'Host' resides on the peer device and a 'Host Controller' resides on the embedded device. The host interacts with the host Controller through a wireless connection. Hence the host and the host controller do not interact with each other through a wired Host Controller Interface (HCI). The peer device and the embedded device may have one or more wireless stacks provided thereon to enable communication. Further the wireless stacks available on the peer devices and the embedded devices may or may not have the same protocols. The setup is such that the wireless stacks may reside in parts on the peer device and on the embedded device thereby allowing the system to carry out transfer of data with other devices, which may or may not run constituents of the wireless stack.

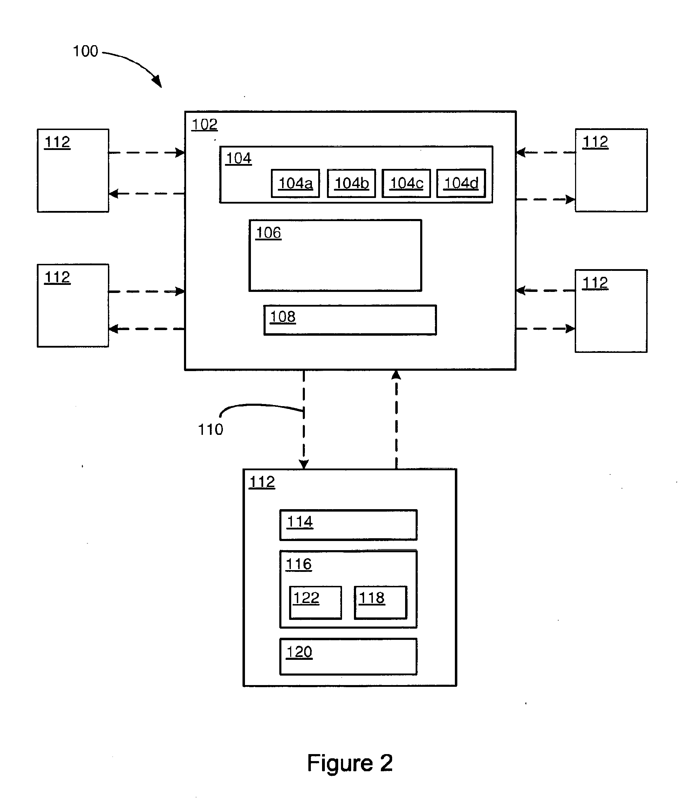

Figure 2 illustrates a wireless communication system according to an exemplary embodiment of the present invention. As illustrated, the system 100 comprises at least one peer device 102 that constitutes 'Host' and at least one embedded device 112 that constitutes 'Host Controller'. The peer device 102 communicates with the embedded device 112 through a wireless link 110. The peer device 102 includes at least one application module 104, a data routing entity 108 and at least a part 106 of one or more wireless stacks. The data routing entity 108 is configured to communicate with the embedded device 112. The application module 104 may further have plurality of applications 104a, 104b, 104c and 104d implemented thereon. The data routing entity 108 may incorporate appropriate mechanisms for data consistency (e.g. retransmission mechanism, sequence number to detect out of sequence or duplicate packets, Checksum calculation and verification). Further, the data routing entity 108 may optionally incorporate appropriate mechanisms for security that includes authentication during connection setup and encryption/decryption of data that is exchanged.

The embedded device 112 has a data routing entity 114, a transceiver 120 and a memory 116. The memory 116 may be configured to store at least a part 118 of the wireless stack. The data routing entity 114 may be configured to transfer data to the peer device 102. The transceiver 120 may be required for transmitting and receiving regular data packets with other wireless devices. The embedded device 112 is configured to execute at least one application 104a, 104b, 104c and 104d, when a connection is established between the embedded device 112 and the peer device 102.

The data routing entity 108 of the peer device 102 establishes a connection with the data routing entity 114 of the embedded device 112 on initiating a connection request from the part 106 of the wireless stack of the peer device 102. The connection is established through the wireless link 110. The part 106 of the wireless stack of the peer device 102 sends a proprietary message to the embedded device 112. The embedded device 112, on receipt of the message from the part 106 of the wireless stack establishes a mechanism to differentiate between data coming from the peer device 102 and data coming from the other sources. The embedded device 112 sends a confirmation message to the part 106 of the wireless stack via the data routing entity 114 to indicate that the embedded device 112 is ready. On successful establishment of connection between the peer device 102 and the embedded device 112, the application module 104 utilizes the wireless stack for desired purposes. Finally, the part 106 of wireless stack terminates the connection with the embedded device 112 by de-initializing the application module 104. Further, the transceiver 120 may be implemented for performing routine applications on the embedded device 112 and for overall communication with the peer device 102.

According to yet another embodiment the peer device 102 and the embedded device 112 may have different communication protocols for interacting with each other. According to this embodiment the embedded device 112 may further have an other wireless stack 122 for receiving the messages from the peer device 102 and communicating the same to the part 118 of wireless stack in the embedded device 112. The other wireless stack 122 process the messages received from the peer device 102 in a protocol format, compatible to the part 118 of the wireless stack in the embedded device 112.

According to yet another embodiment, multiple embedded devices 112 may interact with one peer device 102. Each embedded device 112 simultaneously communicates with the peer device 102 independent of each other. The connection of one embedded device 112 with the peer device 102 may not have any bearing on the connection of another embedded device 112 with the same peer device 102.

The system as illustrated in figure 2 enables the host stack and the host controller to run on different physical devices while providing full stack functionality to any application on the wireless device running the host stack. Individual layers/profiles of the host stack may also reside on different devices as well and provide related functionality to each device. Since the host stack and the host controller are running on different physical devices, individual components of the wireless stack could be added/changed independently.

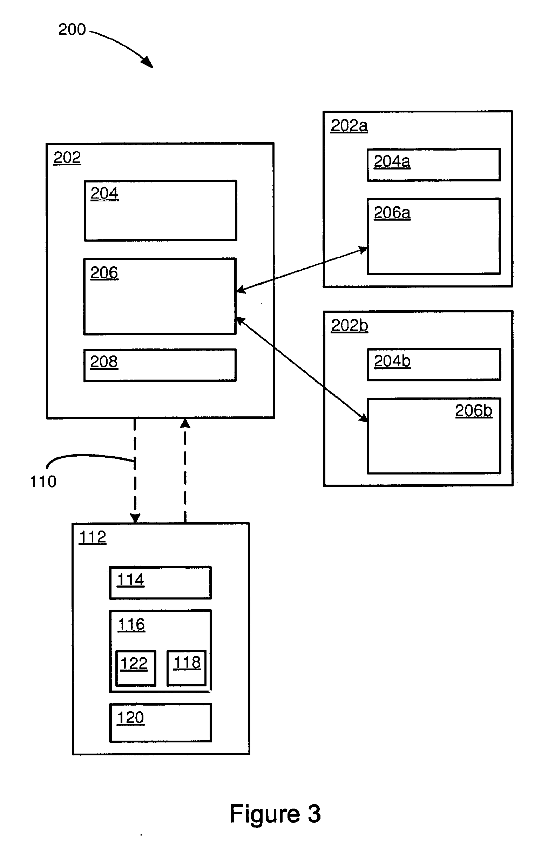

According to yet another embodiment, multiple application modules may reside on different peer devices such that the functionality may be divided among the different peer devices. Figure 3, Figure 4 and Figure 5 illustrates the exemplary implementations where the multiple peer devices are connected to one embedded device.

Turning towards Figure 3 that illustrates a wireless communication system 200 according to an exemplary embodiment of the present invention. According to this embodiment, the communication system comprises multiple peer devices 202, 202a, 202b and at least one embedded device 112. The different peer devices 202, 202a, 202b may have multiple application modules 204, 204a, 204b residing thereon. The plurality of peer devices 202, 202a, 202b may be connected with each other through a wired or a wireless connection. The at least one embedded device 112 is connected to only one primary peer device 202 through a wireless link 110 so as to execute one or more applications 204, 204a, 204b, residing on multiple peer devices 202, 202a, 202b.

The peer devices 202a, 202b, may have parts 206a, 206b of the wireless stacks. The primary peer device 202 may have part 206 of the wireless stacks and a data routing entity 208. The parts 206a, 206b of the wireless stacks of the other peer devices 202a, 202b communicate with the embedded device 112 through the part 206 of the wireless stack of the primary peer device 202. The parts 206a, 206b of the wireless stacks of the other peer devices 202a, 202b send proprietary messages to the part 206 of the Wireless Stack of the primary peer device 202. The data routing entity 208 of the peer device 202 communicates the received messages to the data routing entity 114 of the embedded device 112. Further, the embedded device 112 establishes a mechanism to differentiate between data coming from the peer device 202 and data coming from other sources. The embedded device 112 sends a message to the wireless stack 206 via the data routing entity 114, by correctly encapsulating the message to indicate that the embedded device 112 is ready to execute the application 204a, 204b. On receiving the message, the application module 204 may utilizes the wireless stack 206 for various desired purposes. Finally, the application module 204 de-initializes the wireless stack 206 and the wireless stack 206 terminates the connection with the embedded device 112.

All the parts 206, 206a, 206b of the wireless stacks of the peer devices 202, 202a, 202b are not essentially required to be connected to each other before functionality of the stack becomes available to the connected primary peer device 202. Further according to an embodiment of the present invention, the partitioning is performed in such a manner that the compliance with the specification is maintained and that there is no impact on certification of the devices. The embedded device 112 may further have the other wireless stack 122 to communicate with the peer devices 202, 202a, 202b that may have different protocol stacks.

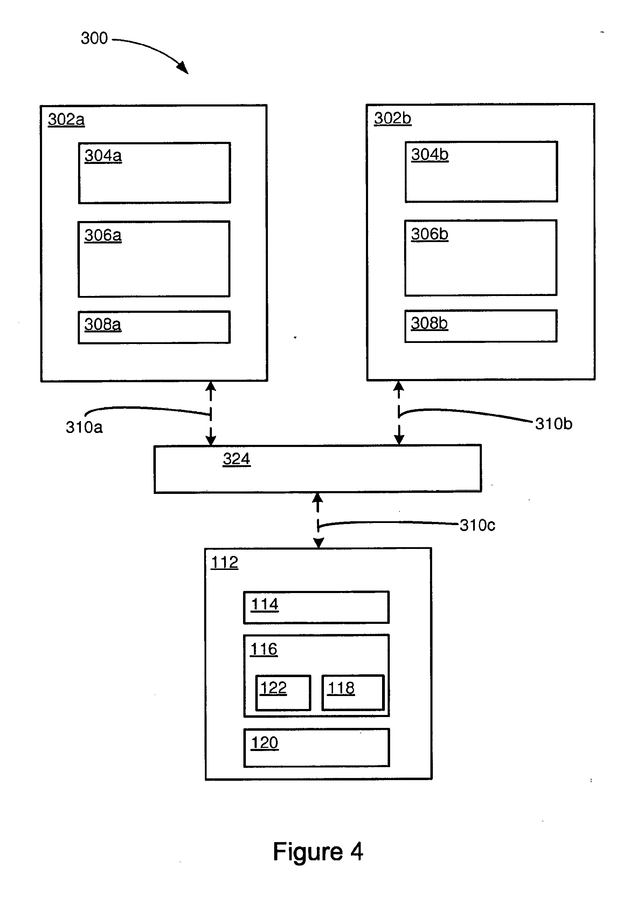

Figure 4 illustrates a wireless communication system 300 according to yet another exemplary embodiment of the present invention. According to this embodiment, the communication system 300 comprises multiple peer devices 302a, 302b, at least one embedded device 112 and an interface layer 324. The multiple peer devices 302a, 302b may communicate with the interface layer 324 through a wired or a wireless connection 310a, 310b that in turn communicates with the embedded device 112 through a wireless connection 310c. According to an embodiment, the interface layer 324 may reside in a remote wireless stack.

Each peer device 302a, 302b may have one or more application modules 304a, 304b, a part 306a, 306b of the wireless stack and a data router entity 308a, 308b. The application modules 304a, 304b, may initiate one or more applications. On such initiation a connection request may be sent from the one or more peer devices 302a, 302b to the interface layer 324 and the one or more parts 306a, 306b of the wireless stacks of the peer devices 302a, 302b are initialized. On receiving a request from one or more peer devices 302a, 302b, the data routing entities 308a, 308b of the one or more peer devices 302a, 302b establishes a connection with the data routing entity 114 of the embedded device 112. The interface layer 324 may choose to initialize the part 306a, 306b of the wireless stack before or after initializing the embedded device 112. The parts 306a, 306b of the wireless stacks of the peer devices 302a, 302b communicates with the embedded device 112 through the interface layer 324. The parts 306a, 306b of the wireless stacks of the peer devices 302a, 302b send a proprietary messages to the one or more parts 118 of the Wireless Stack of the embedded device 112 through the one or more data routing entity 308a, 308b of the peer devices 302a, 302b. On receipt of the proprietary message, the embedded device 112 establishes a mechanism to differentiate between the data coming from the peer devices 302a, 302b and the data coming from the other sources. The embedded device 112 sends a message to the wireless stack 306a, 306b via the data routing entity 114 by correctly encapsulating the message to indicate that the embedded device 112 is ready to execute the applications 304a, 304b. Further, the embedded device 112 may be located across different geographical locations and may be configured to run different applications 304a, 304b. The embedded device 112 may further have the other wireless stack 122 to communicate with the peer devices 302a, 302b that may have different protocol stacks.

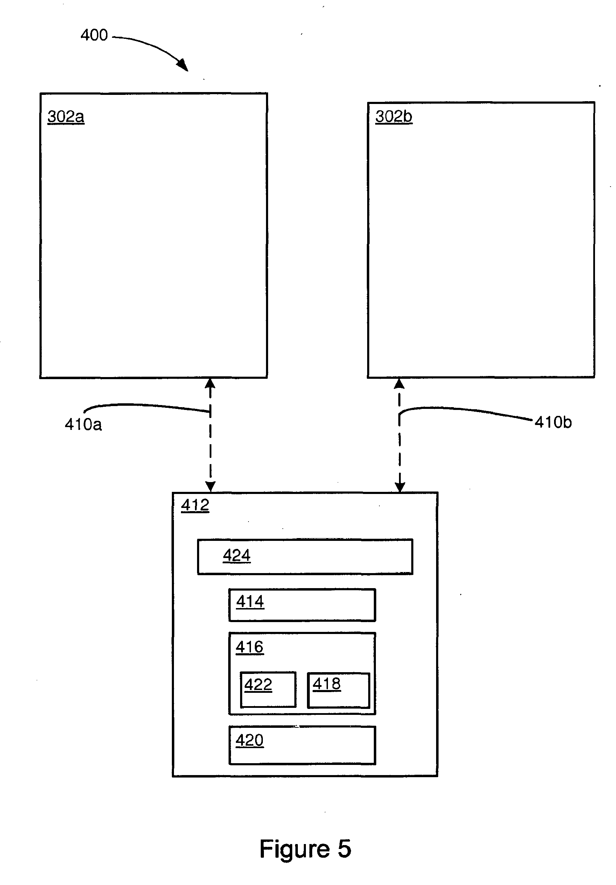

According to yet another exemplary embodiment, the interface layer may reside on the embedded device as illustrated in figure 5. According to this embodiment, a system 400 may have the one or more peer devices 302a, 302b and at least one embedded device 412. The embedded device 412 may have a data routing entity 414, a transceiver 420, an interface layer 424 and a memory 416. The memory 416 is configured to store at least a part 418 of a wireless stack. According to this embodiment, multiple peer devices 302a, 302b may communicate directly with one or more embedded devices 412. The embedded device may further have an other wireless stack 422 to communicate with the embedded devices 302a, 302b that may have different protocol stacks.

It must be appreciated that the invention is not restricted to the exemplary embodiment as illustrated with reference to figure 2, figure 3, figure 4 and figure 5. The invention may be implemented with combination of one or more features illustrated in figure 2, figure 3, figure 4 and figure 5 such as the system may have one or more peer devices that may communicate with the one or more embedded devices through other peer devices or/and one or more peer devices that may communicate with the embedded device through the intermediate interface layer and/or the one or the more embedded devices may have integrated interface layer for communicating with one or more peer devices.

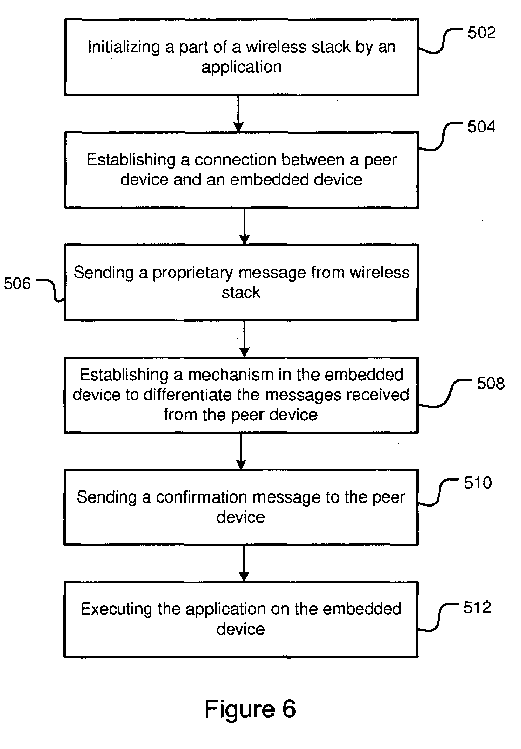

Figure 6 illustrates a method for controlling an embedded device through a peer device according to an exemplary embodiment of the present invention. The peer device may be connected to the embedded device through a wireless link and may have at least one application module and a part of a wireless stack. The embedded device may have a other part of the wireless stack The method includes initialization 502 of the part of the wireless stack of the peer device by the application module. Establishing 504 a connection between the peer device with the embedded device, on initiating 502 the connection request. On establishing 504 a connection, a proprietary message is sent 506 to the embedded device by the part of the wireless stack of the peer device. The embedded device, on receipt of the message from the part of the wireless stack establishes 508 a mechanism to differentiate between data coming from the peer device and data coming from the other sources. The embedded device then sends 510 a confirmation message to the part of the wireless stack to indicate that the embedded device is ready. On successful establishment of connection between the peer device and the embedded device, the application module executes 512 the application on the embedded device..

### Industrial Application

Some exemplary applications of the present invention include A2DP/HS/HF on headset + PBAP on phone wherein a headset supporting A2DP Sink, handsfree and/or headset profiles could, when connected to a cell phone, supports the PBAP profile if the headset and the cell phone support the above architecture. The headset may not natively need to have support for PBAP profile. Other profiles may also be used instead of the profiles disclosed. Further, the present invention may be implemented as a host controller on medical device and host stack running on monitoring device. In such scenario, a host controller could be inserted in a medical instrument and placed inside the body. By not adding the host, power consumption would be reduced. Also the physical footprint of the medical device would be reduced. In addition, since the host stack resides on a separate device, no data needs to be stored on the controller. Further, all updates to the host software need to be performed on the physical device containing the host. No changes in the host controller need to be made. Moreover, since the host stack is on the remote device, alterations could be made to the host stack to make changes in some settings of the host controller.

Another application would be Controller Networks and remote stacks run on the central server. This scenario is similar to the previous scenario. Only the application is in the industrial sphere rather than the medical sphere. Host controller devices could be attached to the field from where data needs to be collected. These could be relayed to a central server running host stacks for all the individual host controllers. The data received could then be interpreted as required. Also, upgrading the host stack software would involve making changes only to one central server rather than changing multiple devices.

The above-described exemplary embodiments are intended to be illustrative in all respects, rather than restrictive, of the present invention. Thus the present invention is capable of many variations in detailed implementation that can be derived from the description contained herein by a person skilled in the art. All such variations and modifications are considered to be within the scope of the present invention as defined by the following claims. No element, act, or instruction used in the description of the present application should be construed as critical or essential to the invention unless explicitly described as such. Also, as used herein, the article "a" is intended to include one or more items.

## Claims

1. A system (100) for enabling parts of a wireless stack to physically run on multiple devices, connected together by a wireless link (110), the system comprising:
at least one peer device (102), the peer device (102) having, at least one application module (104) for at least one embedded device (112), a data routing entity (108) for communicating with the embedded device (112) and at least a part of one or more wireless stacks (106);
the embedded device (112) having a transceiver (120), a data routing entity (114) for communicating with the peer device (102) and a memory (116), the memory (116) being configured to store at least a part of the wireless stack (118), the embedded device being configured to execute the at least one application, on establishing a connection between the embedded device and the peer device.

2. The system as claimed in claim 1, wherein a plurality of peer devices (202, 202a, 202b) have a primary peer device (202) connected to the embedded device (112) to provide one or more applications (204) and the other peer devices (202a, 202b) communicate with the embedded device (112) through the primary peer device (202).

3. The system as claimed in claim 2, wherein parts of the application modules (204a, 204b) reside on the other peer devices (202a, 202b).

4. The system as claimed in claim 1, further comprises an interface layer (324), the interface layer (324) being configured to enable communication between the embedded device (112) and a plurality of peer devices (302a, 302b).

5. The system as claimed in claim 4, wherein the interface layer (424) is provided on the embedded device (412).

6. The system as claimed in claim 1, wherein plurality of the embedded devices (112) are connected to one peer device (102 by wireless links..

7. The system as claimed in claim 1, wherein the embedded device (112) have an other wireless stack (122) for communicating with the peer device (102) having a wireless protocol stack different from a wireless protocol stack of the embedded device (112).

8. A method of controlling at least one embedded device (112) through at least one peer device (102), the peer device (102) having at least one application module (104) and at least a part (106) of one or more wireless stack , the method comprising the step of:
establishing a connection (504) between the at least one peer device (102) and the at least one embedded device (112), the connection being established, on initializing (502) the part of wireless stack (106) by the at least one application module (104);
sending a proprietary message (506) from the wireless stack (106) of the peer device (102) to the embedded device (112) through a wireless link (110);
establishing, on receiving the proprietary message, a mechanism (510) in the embedded device (112) to differentiate between data received from the wireless stack (106) and data received from other sources;
sending a confirmation message (512) from the embedded device (112) to the peer device (102), after the embedded device is ready to execute the at least one application module (104); and
executing (514) the at least one application stored on the part (106) of wireless stack of the peer device (102), on the embedded device (112).

9. The method of claim 8, wherein the connection (504) is established between a data routing entity (114) of the embedded device and a data routing entity (108) of the peer device.

10. The method of claim 8, further comprises communication (504) between different peer devices (202a, 202b), when the applications are stored on different peer devices.

11. The method of claim 10, wherein the embedded device (112) is connected to only one peer device (202) for executing the applications (204a, 204b).

12. The method of claim 8, further comprises communication (504) between the embedded device (112) and the plurality of peer devices (302a, 302b) through an interface layer (324).

13. An embedded device (112) of a wireless communication system, the embedded device comprising:
a part of a wireless stack (118), another part of the wireless stack (106) being provided on one or more peer devices (102) in the communication system, wherein the peer device have at least one application module (104); and
a data routing entity (114), the data routing entity being configured to establish a wireless connection with the one or more peer devices,
wherein the embedded device is configured to exhibit a function, based on the execution/implementation of the application on the peer device (102).

14. The embedded device of claim 13, further includes an interface layer (424) for communicating with plurality of peer devices (302a, 302b).

15. The embedded device of claim 13, wherein the embedded device (112) have an other wireless stack (122) for communicating with the peer device (102) having a wireless protocol stack different from a wireless protocol stack of the embedded device (112).

16. A server (102) of a wireless communication system, the server comprising:
a memory having a part of a wireless stack (106), the other part of the wireless stack (118) being provided on an embedded device (112) in the wireless communication system, and one or more applications being installed at least in part on the server and on the embedded device; and
a router (108) being configured to establish a wireless connection with the at least one embedded device (112),
wherein the server is configured to control the function of the part of the application executing on the embedded device.

## Patentansprüche

1. System (100), um es Teilen eines drahtlosen Stapels zu ermöglichen, physikalisch auf mehreren Geräten ausgeführt zu werden, die durch eine drahtlose Verbindung (110) miteinander verbunden sind, wobei das System Folgendes umfasst:
mindestens ein Peer-Gerät (102), wobei das Peer-Gerät (102) an mindestens einem Anwendungsmodul (104) für mindestens ein eingebettetes Gerät (112) ein Datenroutingelement (108) zum Kommunizieren mit dem eingebetteten Gerät (112) und mindestens einen Teil von einem oder mehreren drahtlosen Stapeln (106) aufweist;
wobei das eingebettete Gerät (112) ein Sende/Empfangsgerät (120), ein Datenroutingelement (114) zum Kommunizieren mit dem Peer-Gerät (102) und einen Speicher (116) aufweist, wobei der Speicher (116) konfiguriert ist, um mindestens einen Teil des drahtlosen Stapels (118) zu speichern, wobei das eingebettete Gerät konfiguriert ist, um beim Herstellen einer Verbindung zwischen dem eingebetteten Gerät und dem Peer-Gerät die mindestens eine Anwendung auszuführen.

2. System nach Anspruch 1, wobei mehrere Peer-Geräte (202, 202a, 202b) ein primäres Peer-Gerät (202) aufweisen, das mit dem eingebetteten Gerät (112) verbunden ist, um eine oder mehrere Anwendungen (204) bereitzustellen, und die anderen Peer-Geräte (202a, 202b) durch das primäre Peer-Gerät (202) mit dem eingebetteten Gerät (112) kommunizieren.

3. System nach Anspruch 2, wobei Teile der Anwendungsmodule (204a, 204b) auf den anderen Peer-Geräten (202a, 202b) gespeichert sind.

4. System nach Anspruch 1, das ferner eine Schnittstellenschicht (324) umfasst, wobei die Schnittstellenschicht (324) konfiguriert ist, um die Kommunikation zwischen dem eingebetteten Gerät (112) und mehreren Peer-Geräten (302a, 302b) zu ermöglichen.

5. System nach Anspruch 4, wobei die Schnittstellenschicht (424) auf dem eingebetteten Gerät (412) bereitgestellt ist.

6. System nach Anspruch 1, wobei die mehreren eingebetteten Geräte (112) durch drahtlose Verbindungen mit einem Peer-Gerät (102) verbunden sind.

7. System nach Anspruch 1, wobei die eingebetteten Geräte (112) einen anderen drahtlosen Stapel (122) zum Kommunizieren mit dem Peer-Gerät (102) aufweisen, das einen drahtlosen Protokollstapel aufweist, der sich von einem drahtlosen Protokollstapel des eingebetteten Geräts (112) unterscheidet.

8. Verfahren zum Steuern von mindestens einem eingebetteten Gerät (112) durch mindestens ein Peer-Gerät (102), wobei das Peer-Gerät (102) mindestens ein Anwendungsmodul (104) und mindestens einen Teil (106) von einem oder mehreren drahtlosen Stapeln aufweist, wobei das Verfahren die folgenden Schritte umfasst:
Herstellen einer Verbindung (504) zwischen dem mindestens einen Peer-Gerät (102) und dem mindestens einen eingebetteten Gerät (112), wobei die Verbindung beim Initialisieren (502) des Teils des drahtlosen Stapels (106) durch das mindestens eine Anwendungsmodul (104) hergestellt wird;
Senden einer proprietären Nachricht (506) von dem drahtlosen Stapel (106) des Peer-Geräts (102) an das eingebettete Gerät (112) durch eine drahtlose Verbindung (110) ;
Herstellen eines Mechanismus (510) in der eingebetteten Vorrichtung (112) zum Differenzieren zwischen Daten, die von dem drahtlosen Stapel (106) empfangen werden, und Daten, die von anderen Quellen empfangen werden, beim Empfangen der proprietären Nachricht;
Senden einer Bestätigungsnachricht (512) von dem eingebetteten Gerät (112) an das Peer-Gerät (102), nachdem das eingebettete Gerät bereit ist, das mindestens eine Anwendungsmodul (104) auszuführen; und
Ausführen (514) der mindestens einen Anwendung, die auf dem Teil (106) des drahtlosen Stapels des Peer-Geräts (102) gespeichert ist, auf dem eingebetteten Gerät (112).

9. Verfahren nach Anspruch 8, wobei die Verbindung (504) zwischen einem Datenroutingelement (114) des eingebetteten Geräts und einem Datenroutingelement (108) des Peer-Geräts hergestellt ist.

10. Verfahren nach Anspruch 8, das ferner das Kommunizieren (504) zwischen unterschiedlichen Peer-Geräten (202a, 202b) umfasst, wenn die Anwendungen auf unterschiedlichen Peer-Geräten gespeichert sind.

11. Verfahren nach Anspruch 10, wobei das eingebettete Gerät (112) mit nur einem Peer-Gerät (202) zum Ausführen der Anwendungen (204a, 204b) verbunden ist.

12. Verfahren nach Anspruch 8, das ferner das Kommunizieren (504) zwischen dem eingebetteten Gerät (112) und den mehreren Peer-Geräten (302a, 302b) durch eine Schnittstellenschicht (324) umfasst.

13. Eingebettetes Gerät (112) eines drahtlosen Kommunikationssystems, wobei das eingebettete Gerät Folgendes umfasst:
einen Teil eines drahtlosen Stapels (118), wobei ein anderer Teil des drahtlosen Stapels (106) auf einem oder mehreren Peer-Geräten (102) in dem Kommunikationssystem bereitgestellt ist, wobei die Peer-Geräte mindestens ein Anwendungsmodul (104) aufweisen; und
ein Datenroutingelement (114), wobei das Datenroutingelement konfiguriert ist, um eine drahtlose Verbindung mit dem einen oder den mehreren Peer-Geräten herzustellen,
wobei das eingebettete Gerät konfiguriert ist, um auf der Grundlage der Ausführung/Durchführung der Anwendung auf dem Peer-Gerät (102) eine Funktion zu zeigen.

14. Eingebettetes Gerät nach Anspruch 13, das ferner eine Schnittstellenschicht (424) zum Kommunizieren mit mehreren Peer-Geräten (302a, 302b) umfasst.

15. Eingebettetes Gerät nach Anspruch 13, wobei das eingebettete Gerät (112) einen anderen drahtlosen Stapel (122) zum Kommunizieren mit dem Peer-Gerät (102) aufweist, das einen drahtlosen Protokollstapel aufweist, der sich von einem drahtlosen Protokollstapel des eingebetteten Geräts (112) unterscheidet.

16. Server (102) eines drahtlosen Kommunikationssystems, wobei der Server Folgendes umfasst:
einen Speicher, der einen Teil eines drahtlosen Stapels (106) aufweist, wobei der andere Teil des drahtlosen Stapels (118) auf einem eingebetteten Gerät (112) in dem drahtlosen Kommunikationssystem bereitgestellt wird, und eine oder mehrere Anwendungen zumindest teilweise auf dem Server und auf dem eingebetteten Gerät installiert sind; und
einen Router (108), der konfiguriert ist, um eine drahtlose Verbindung mit dem mindestens einen eingebetteten Gerät (112) herzustellen,
wobei der Server konfiguriert ist, um die Funktion des Teils der Anwendung zu steuern, die auf dem eingebetteten Gerät ausgeführt wird.

## Revendications

1. Système (100) destiné à permettre à des parties d'une pile de communication sans fil de s'exécuter physiquement sur des dispositifs multiples, connectés l'un à l'autre par une liaison sans fil (110), le système comprenant :
au moins un dispositif homologue (102), le dispositif homologue (102) possédant au moins un module applicatif (104) pour au moins un dispositif intégré (112), une entité de routage de données (108) destinée à communiquer avec le dispositif intégré (112) et au moins une partie d'une ou plusieurs piles de communication sans fil (106) ;
le dispositif intégré (112) possédant un émetteur-récepteur (120), une entité de routage de données (114) pour la communication avec le dispositif homologue (102) et une mémoire (116), la mémoire (116) étant configurée pour stocker au moins une partie de la pile de communication sans fil (118), le dispositif intégré étant configuré pour exécuter ladite au moins une application lors de l'établissement d'une connexion entre le dispositif intégré et le dispositif homologue.

2. Système selon la revendication 1, dans lequel une pluralité de dispositifs homologues (202, 202a, 202b) comprend un dispositif homologue primaire (202) connecté au dispositif intégré (112) pour fournir une ou plusieurs applications (204) et les autres dispositifs homologues (202a, 202b) communiquent avec le dispositif intégré (112) via le dispositif homologue primaire (202).

3. Système selon la revendication 2, dans lequel des parties des modules applicatifs (204a, 204b) résident sur les autres dispositifs homologues (202a, 202b).

4. Système selon la revendication 1, comprenant en outre une couche d'interface (324), la couche d'interface (324) étant configurée pour permettre la communication entre le dispositif intégré (112) et une pluralité de dispositifs homologues (302a, 302b).

5. Système selon la revendication 4, dans lequel la couche d'interface (424) est fournie sur le dispositif intégré (412).

6. Système selon la revendication 1, dans lequel la pluralité de dispositifs intégrés (112) est connectée à un dispositif homologue (102) par des liaisons sans fil.

7. Système selon la revendication 1, dans lequel le dispositif intégré (112) possède une autre pile de communication sans fil (122) pour communiquer avec le dispositif homologue (102) qui a une pile de protocole sans fil différente d'une pile de protocole sans fil du dispositif intégré (112).

8. Procédé de commande d'au moins un dispositif intégré (112) par au moins un dispositif homologue (102), le dispositif homologue (102) possédant au moins un module applicatif (104) et au moins une partie (106) d'une ou plusieurs piles de communication sans fil, le procédé comprenant les étapes consistant à :
établir une connexion (504) entre ledit au moins un dispositif homologue (102) et ledit au moins un dispositif intégré (112), la connexion étant établie lors de l'initialisation (502) de la partie de la pile de communication sans fil (106) par ledit au moins un module applicatif (104) ;
envoyer un message exclusif (506) entre la pile de communication sans fil (106) du dispositif homologue (102) et le dispositif intégré (112) via une liaison sans fil (110) ;
à réception du message exclusif, établir un mécanisme (510) au sein du dispositif intégré (112) afin de différencier les données reçues de la pile de communication sans fil (106) des données reçues d'autres sources ;
envoyer un message de confirmation (512) entre le dispositif intégré (112) et le dispositif homologue (102) après que le dispositif intégré est prêt à exécuter ledit au moins un module applicatif (104) ; et
exécuter (514), sur le dispositif intégré (112), ladite au moins une application stockée sur la partie de la pile de communication sans fil (106) du dispositif homologue (102).

9. Procédé selon la revendication 8, dans lequel la connexion (504) est établie entre une entité de routage de données (114) du dispositif intégré et une entité de routage de données (108) du dispositif homologue.

10. Procédé selon la revendication 8, comprenant en outre une communication (504) entre différents dispositifs homologues (202a, 202b) lorsque les applications sont stockées sur des dispositifs homologues différents.

11. Procédé selon la revendication 10, dans lequel le dispositif intégré (112) est connecté à un seul dispositif homologue (202) pour exécuter les applications (204a, 204b).

12. Procédé selon la revendication 8, comprenant en outre une communication (504) entre le dispositif intégré (112) et la pluralité de dispositifs homologues (302a, 302b) via une couche d'interface (324).

13. Dispositif intégré (112) d'un système de communication sans fil, le dispositif intégré comprenant :
une partie d'une pile de communication sans fil (118), une autre partie de la pile de communication sans fil (106) étant fournie sur un ou plusieurs dispositifs homologues (102) du système de communication, le dispositif homologue possédant au moins un module applicatif (104) ; et
une entité de routage de données (114), l'entité de routage de données étant configurée pour établir une connexion sans fil avec lesdits un ou plusieurs dispositifs homologues ;
le dispositif intégré étant configuré pour présenter une fonction, en raison de l'exécution/de la mise en oeuvre de l'application sur le dispositif homologue (102).

14. Dispositif intégré selon la revendication 13, comprenant en outre une couche d'interface (424) afin de communiquer avec une pluralité de dispositifs homologues (302a, 302b).

15. Dispositif intégré selon la revendication 13, le dispositif intégré (112) possédant une autre pile de communication sans fil (122) pour communiquer avec le dispositif homologue (102) qui possède une pile de protocole sans fil différente d'une pile de protocole sans fil du dispositif intégré (112).

16. Serveur (102) d'un système de communication sans fil, le serveur comprenant :
une mémoire comprenant une partie d'une pile de communication sans fil (106), l'autre partie de la pile de communication sans fil (118) étant fournie sur un dispositif intégré (112) dans le système de communication sans fil, et une ou plusieurs applications étant installées au moins en partie sur le serveur et sur le dispositif intégré ; et
un routeur (108) configuré pour établir une connexion sans fil avec ledit au moins un dispositif intégré (112) ;
dans lequel le serveur est configuré pour commander le fonctionnement de la partie de l'application qui s'exécute sur le dispositif intégré.
